# EUROPEAN PATENT SPECIFICATION

(11) **EP 1 434 404 B1**
(45) Date of publication and mention of the grant of the patent: **16.03.2005**
(21) Application number: 02293184.4
(22) Date of filing: 20.12.2002
(51) Int. Cl.: H04L 29/06, H04L 29/12, H04L 9/00

(54) **Method and system to provide authentication for a user**
Verfahren und Vorrichtung zur Authentifizierung eines Benutzers
Procédé et système permettant l'authentification d'un utilisateur

(43) Date of publication of application: 30.06.2004
(73) Proprietor: ALCATEL, 75008 Paris (FR)
(72) Inventor: Bouchat, Christele, 2060 Berchem (BE); Ooghe, Sven Maurice Joseph, 9000 Gent (BE); Six, Erwin Alfons Constant, 9270 Laarne (BE)
(74) Representative: Narmon, Gisèle Marie Thérèse

(56) References cited:
- WO-A-01/11452
- US-A1- 2001 047 484
- US-B- 6 230 269
- US-B1- 6 393 484
- DROMS R ET AL: "Authentication for DHCP Messages" IETF INTERNET DRAFT <DRAFT-IETF-DHC-AUTHENTICATION-08.TXT>, [Online] August 1998 (1998-08), XP002188115 Retrieved from the Internet: <URL:http://www.ietf.org/proceedings/98aug /I-D/draft-ietf-dhc-authentication-08.txt> [retrieved on 2003-03-26]
- GUDMUNDSSON O ET AL: "Security Requirements for the DHCP Protocol" IETF INTERNET DRAFT <DRAFT-IETF-DHC-SECURITY-REQUIREMENTS-00.T XT>, [Online] March 1998 (1998-03), XP002236043 Retrieved from the Internet: <URL:http://www.ietf.org/proceedings/99mar /I-D/draft-ietf-dhc-security-requirements- 00.txt> [retrieved on 2003-03-25]
- BELLARE M: "MESSAGE AUTHENTICATION USING HASH FUNCTIONS - THE HMAC CONSTRUCTION" 1996 , CRYPTOBYTES MAGAZINE, XX, XX, VOL. 2, NR. 1, PAGE(S) 1-5 XP002184520 * the whole document *
- BIDWELL A: "PRIVATE KEYS, TRUSTED THIRD PARTIES AND KERBEROS" NATIONAL INFORMATION SYSTEMS SECURITY CONFERENCE, XX, XX, vol. 5, no. 2, 21 June 1996 (1996-06-21), pages 52-63, XP001029158

## Description

The present invention relates to a method to provide an authentication for a user in a telecommunication network during session establishment according to a protocol between a user equipment and an authentication device according to the preamble of claim 1, and to a user equipment and to an authentication device according to, respectively, the preamble of claim 7 and claim 8, and to a telecommunication network according to the preamble of claim 10.

Such a method and related devices is already known in the art. Today, an actual used protocol for connection establishment in public domain environments such as any digital subscriber line XDSL environment is the known point-to-point protocol. This PPP protocol knows two main authentication-protocols to authenticate a user i.e. the Password Authentication Protocol i.e. PAP protocol and the Challenge-Handshake Authentication Protocol i.e. the CHAP protocol.

The Password Authentication Protocol works with a request message being send by a user to an authenticator. This request message comprises a user identification that uniquely identifies the user and a user-password that is associated to the user. The authenticator verifies the received user-password with a verification user-password that is associated according to its available information to the received user identification. In the event when a match is found between the received user-password and the verification password, an acknowledgment is send to the user. The PAP protocol is an easy but not secure protocol because the user-password of the user can be read inside the request message. However, for a point-to-point protocol, this is no major problem.

According to the Challenge-Handshake Authentication Protocol a user sends a request-message to the authenticator. This request-message comprises a user-identification of the user. The authenticator sends back a random string, called a 'Challenge' whereby the user, upon reception of this Challenge string, transforms the string. The user equipment transforms the Challenge string via a one-way function to a new transformed string by using his user-password as a key. This transformed string is send back to the authenticator. The authenticator performs the same operation with the first challenge string and a user password according to his own information e.g. a user password that is present in his database. This string can be called verification string. Upon reception of the transformed string, the authenticator verifies whether his solution i.e. the verification string is the same as transformed string and acknowledges the user.

A method to provide an authentication for a user in a telecommunication network during session establishment according to a protocol between a user equipment and an authentication device is also described in the International Application WO - A - 0111452 published at 15 February 2001 under the PCT with Title : Access Management system and Method employing Secure Credentials. The described method in this document comprises a step of generating by a first generator of the user equipment a credential that is based upon a user password that is associated to this user, and a session identifier that is determined by the user equipment for the actual session of the user that is actually being established.

It has to be explained that, due to various reasons, the used Point to Point Protocol PPP for connection establishment in the public domain environments such as any digital subscriber line environment is actual being replaced by a broadcast protocol such as the Dynamic Host Configuration Protocol DHCP.

*This DHCP protocol is described in the Standard Track document of the Network Working Group, Request For Comment number 2131 and number 2132 of the Internet Engineering Task Force IETF.*

This known Dynamic Host Configuration Protocol DHCP protocol is used between a user equipment and a DHCP Server i.e. in private domains and is initially developed by the IETF mainly for inter-domain identification by means of e.g. inclusion of the Hardware address of the user equipment i.e. the client in a client identification field of a DHCP message.

Such a client host authentication is described in DROMS R et AL: 'Authentication for DHCP Messages' IETF Internet Draft <DRAFT-IETF-DHC-AUTHENTICATION-O8.TXT>, August 1998 (1998-08), XP002188155. This document describes that the Dynamic Host Configuration Protocol (DHCP) provides a framework for passing configuration information to hosts on a TCP/IP network. In some situation, network administrators may wish to constrain the allocation of addresses to authorized hosts. Additionally, some network administrators may wish to provide for authentication of the source and contents of DHCP messages. This document defines a new DHCP option through which authorization tickets can be easily generated and newly attached hosts with proper authorization can be automatically configured from an authenticated DHCP server.

However, in public domain environments the DHCP protocol will be used between a user-equipment and a DHCP server, which can be located inside an Access Multiplexer, a Broadband Access Server or an Edge Router. Network Service offered via this access network mainly need user identification instead of equipment identification, therefor the used protocols require a user-based authentication.

However, a straightforward implementation of a user authentication protocol such as PAP or CHAP in this DHCP protocol would provide the following problems. Since DHCP is a broadcasting protocol environment, a PAP implementation would not be secure since the password and username would be sent over the network in an unencrypted form. Furthermore, the actual standard of DHCP protocol does not include extra messages such as 'forwarding a string challenge' which is required to implement the CHAP protocol. Indeed, one would need to change the message exchange mechanism of DHCP completely. Indeed, between the moment that a user, called client in the DHCP documents, would send a DHCP-Discover broadcast message to the authenticator and the moment that the authenticator has to give to the user an offer message, there are no DHCP messages available to be used. This means that the CHAP protocol sequence doesn't fit in DHCP protocol. Within DHCP, there is no mechanism to allow a secure user-based authentication.

A possible solution would be to add an authentication phase by performing authentication after the IP connection has been established when using the DHCP protocol. In this case, web-based authentication can be used, by means of the Hypertext Transfer Protocol (HTTP). However, such a solution requires that the user already has an IP address before making the authentication.

Such a solution is described in the US patent filed April 12, 1999 with patent number US 6,393,484 B1 and date of patent May 21, 2002. Therein information networks and methods of operation are described. More particularly, a system and method for controlled access to shared medium public an semi-public IP networks is described. However, user identification is only performed after the IP connection has been established.

Also the above-discussed WO 01/11452 published patent application that provides a single sign-on architecture would provide a message, in the form of a http request comprising a cookie, that would be sent from a browser to an authentication device, only after the IP connection has been established.

An object of the present invention is to provide a method that provides an authentication for a user in a telecommunication network during session establishment between a user equipment and an authentication device, according to the above known methods but which is suited to be used in public domain environments and which is simple to be implemented in existing session establishment protocols with a broadcasting character and which happens as early as possible during the session establishment, before any offer is given to the user that carries specific configuration options depended on the user.

According to the invention, this object is achieved with the method to provide an authentication for a user in a telecommunication network during session establishment according to a protocol between a user equipment and an authentication device according to claim 1, and with the user equipment and the authentication device which are implementing such a method, according to, respectively, claim 5 and claim 6, and with the telecommunication network that comprises such user equipment and such authentication device, according to claim 8.

The present method to provide an authentication for a user in a telecommunication network during session establishment according to a protocol between a user equipment and an authentication device comprises therefor the steps of :
- generating by a first generator of the user equipment a credential that is based upon a user password which is associated to this user, and a session identifier that is determined by the user equipment for the actual session of the user that is actual being established; and
- comprising by a second generator of the user equipment in a session message e.g. one of the first session messages of the actual used protocol:
   - a user identification that uniquely identifies the user;
   - the determined session identifier; and
   - the generated credential; and
- forwarding by the second generator the session message to the authentication device; and
- upon reception by the authentication device of the session message by a third generator generating a verification credential based upon the received session identifier of the session message and a user password that is associated, according to the information of the authentication device, to the received user identification of the session message; and
- verifying by a verifier of the authentication device the received credential with the verification credential and thereby providing the authentication for the user.

Indeed, by sending by the user equipment a session message that incorporates his user identification e.g. its username and an encrypted form of his password i.e. a credential, and by generating this credential based upon:
- a session identifier such as the Session identification of the connection being set-up e.g. a random session number, which is usually forwarded in the known messages anyway; and
- the original user password associated to the user; and
whereby the message from the user equipment to the authenticator comprises the session identifier, the user identification and the generated credential, the method differs from the CHAP protocol by the fact that the user equipment chooses the challenge random string such as the session identifier by itself. The authenticator at his turn verifies whether the credential of the user matches with its own verification credential by generating its own verification credential based on the available password according to his information and the received session identifier.

This method and related devices are further adapted for user authentication by means of a broadcasting protocol that is the DHCP protocol. It gives the ability of having a better security than the use of plain text usernames and user passwords, without having to introduce new session establishment protocol messages.

Furthermore, said message for providing the three items i.e. the user identification that uniquely identifies the user, the session identifier and the generated credential, is the Discover message of the DHCP protocol. It has to be explained that a typical DHCP message contains a fixed field and an option-field. Indeed, according to the described Format of the DHCP messages in the above-mentioned RFC 2131 in paragraph 2 Protocol Summary, each DHCP message comprises an options field. Some predefined options inside this option-field are described more in detail in RFC 2132.

Furthermore, some predefined options, as an example option number 61, of this option-field have a predefined content-field that can be implemented freely according to the operator's request. As an example in this option number 61 (see paragraph 9.14 of RFC 2132 - DHCP), the il...in field, where actual typical the hardware address of a user equipment is included, could also be implemented by a user-identification of the user itself. It has to be understood that this example is only one possible implementation of the present invention. The aim is that the Discover message of the DHCP - standard comprises different potential fields for the inclusion of the above-mentioned three items.

Hereby the user authentication happens as early as possible during the session establishment, before any offer is given which carries specific configuration options depended on the user. In this way, the three items defined in the method according to the present invention that are to be transmitted by the user equipment to the authentication device might be defined as a predefined new option and incorporated in such an Option Field of the Discover message. This is described in claim 1.

The security will even be more guaranteed in the event when the method further comprises also determining according to predefined rules and conditions an acceptance of the received session identifier. Indeed, when on top of the verification of the credential, the authenticator also verifies whether the session identifier is an acceptable one according to predefined rules and conditions, potential hackers will be easily disappointed. An example of the predefined rules and conditions is e.g. for a session identifier that should increment with start up of every new session, verifying whether the session ideitifier is not reused frequently and whether the session identifier is indeed incremented every time. This is described in claim 2.A possible implementation of the session identifier that uniquely identifies the session, which is actually being established is described in claim 4. Indeed, as it is described in RFC 2131 in paragraph 2, field number (4) is defined as a Transaction Identifier. This transaction identifier XID, also called the session identifier, is usually a random number chosen by the client i.e. the user equipment, and used by the client and the server i.e. the authenticator in order to associate messages and responses between a client an a server. Now, when the user equipment chooses this session identification as a number that increments with every start of a new session establishment, the authentication device is enabled to follow the expected value for the session identifier and to control it accordingly before accepting it. Since this session identifier is forwarded anyway from the user equipment to the authentication device, according to such an implementation, no extra field has to be foreseen in the used session message. Furthermore, since the session identification according to the known standard is defined as 32-bit long, this makes it difficult to break.

Finally, it has to be explained that the authentication device according to the present invention can at least partly be included in a network access provided in a public domain environment. This is described in claim 8. This means that the functional blocks with the associated functionality can be included as a whole in one and the same network device but can as well be distributed over different network domains such as the Network Access Provider or the Network Service Provider. Although that one of the most straightforward places is the present network access provider via which the user equipment gets access to the public domain internet, part of the authentication device can at the same time be integrated in a Network Service Provider e.g. at a Remote Authentication Protocol Server. This will be explained in more details in a later paragraph.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Figure 1 represents a telecommunication network that comprises a user equipment and authentication device according to the present invention; and
Figure 2 represents a user-equipment and an authentication device with its interactions according to the present invention and its associated functional blocks.

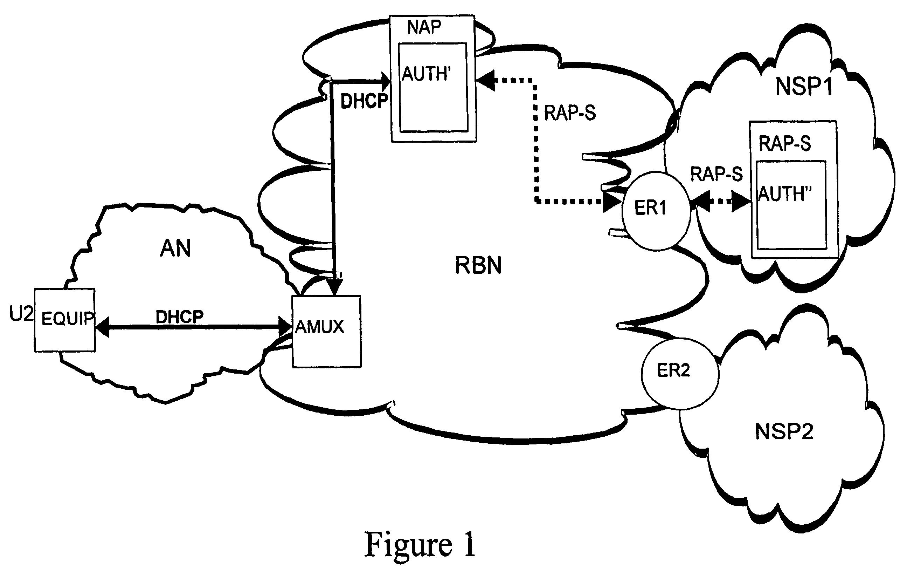

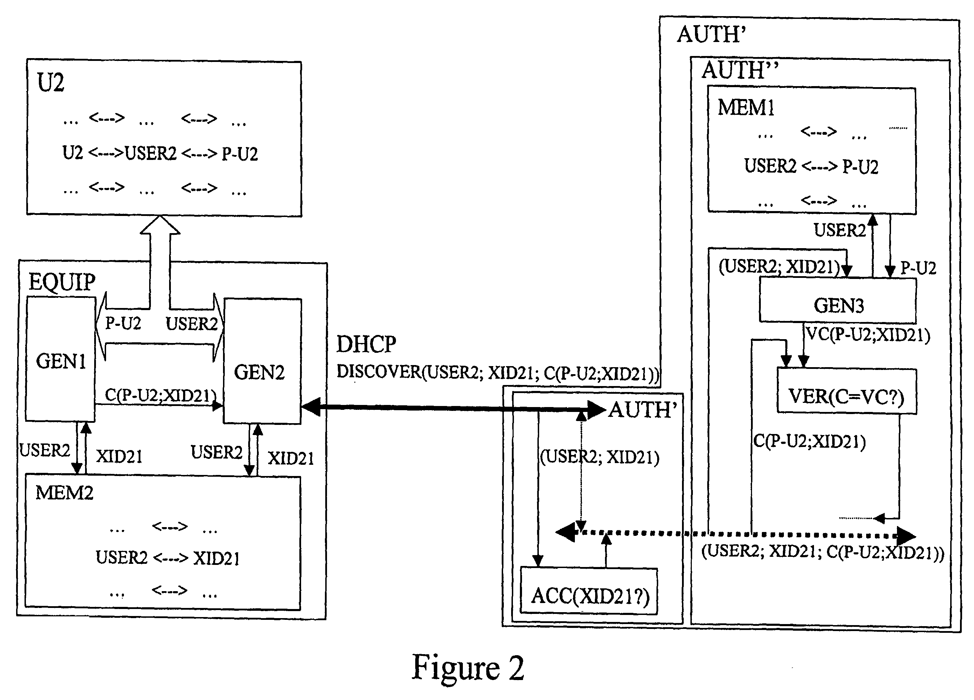

The working of the devices according to the present invention in accordance with its telecommunication environment that is shown in Figure 1 and Figure 2 will be explained by means of a functional description of the different blocks shown therein. Based on this description, the practical implementation of the blocks will be obvious to a person skilled in the art and will therefor not be described in details. In addition, the principle working of the method to provide an authentication for a user will be described in further detail.

Referring to Figure 1, A telecommunication network is shown. The telecommunication network comprises an access network AN, two Service Provider Networks NSP1 and NSP2 and a Regional Broadband Network RBN.

The access network AN comprises a user equipment EQUIP of a user and an access multiplexer AMUX at the edge between the access network AN and the Regional Broadband Network RBN.

The Regional Broadband Network RBN further comprises a Network Access Provider NAP and two edge routers ER1 and ER2 at the edge with, respectively, the first network service provider NSP1 and the second network service provider NSP2.

The first network service provider NSP1 further comprises a Remote Authentication Protocol Server RAP-S.

The User Equipment EQUIP is coupled via the Access Multiplexer AMUX to the Network Access Provider NAP. Between the user equipment EQUIP and the Network Access Provider NAP a Dynamic Host configuration Protocol DHCP is enabled.

The Network Access Provider NAP is coupled via the first Edge Router ER1 to the Remote Authentication Protocol Server RAP-S. Between the Network Access Provider NAP and the Remote Authentication Protocol Server a Remote Authentication Protocol RAP is enabled.

As a possible embodiment of the present invention the functional blocks of the authentication device AUTH is distributed over the Remote Authentication Protocol Server RAP-S and the Network Access provider NAP. In order to show this distributed functionality the Network Access provider NAP comprises a first part of the authentication device, called AUTH' and the Remote Authentication Protocol server comprises a second part of the authentication device, called AUTH".

The two parts of the authentication device AUTH (See figure 1) are providing, according to the method of the invention, an authentication for User 2, named in the Figures U2 which is located at the user equipment EQUIP. The User U2 desires to start establishment of a session. Presume that this will be the first session for user U2. The desired session establishment will be set up according to the DHCP protocol.

Referring to Figure 1, the user-equipment EQUIP and the authentication device AUTH with its interactions according to the present invention and its associated functional blocks is shown.

User U2 is located at the User Equipment EQUIP and provides at the right time its username and password.

The User Equipment EQUIP comprises a first generator GEN1 and a second generator GEN2. Both generators are coupled to an output of the user Equipment EQUIP for the interaction with the user U2, to a second memory MEM2 and to each other. The second generator GEN2 is also coupled to an output of the user equipment EQUIP for the interaction with the network i.e. coupled via the Access Multiplexer of Figure 2 to the authentication device AUTH.

The authentication device AUTH comprises the two above-mentioned parts i.e. AUTH' and AUTH".

The first part of the authentication device AUTH' comprises an acceptor ACC that is coupled via an input/output of the first part of the authentication device AUTH' to the second generator GEN2 of the user equipment EQUIP and via an input/output of the first part of the authentication device AUTH' towards the second part of the authentication device AUTH".

The second part of the authentication device AUTH" comprises an input/output that is coupled to a first memory MEM1, a third generator GEN3 and a verifier VER. The first memory MEM1 is also coupled to the third generator GEN3 that on its turn is also coupled to the verifier VER.

The user equipment EQUIP comprises the first generator GEN1 to generate a credential C(P-U2; XID21) based upon a user password P-U2 being associated to the user U2 and a session identifier XID21 being determined by the user equipment EQUIP for this session which is actual being established.

The generated credential, referred to as C(P-U2; XID21), is chosen for this particular embodiment as a one-way-function. This one-way-function is based on the user password P-U2 and on the session identifier XID21. The user password P-U2 is provided by the user U2 to his user equipment at the time of starting up its session. This user password is a password of the user U2 that has been predefined and that is known by the user U2.

The symbol XID21 is used to show that the session identifier is associated to a user U2 (second user) who is setting up its first session.

The session identifier XID21 is chosen to be the session identification according to the DHCP RFC 2131. It has to be understood that a predefined method with predefined rules and conditions is used to determine this session identification XID21. Presume that the value of the session identifier is determined by the user equipment EQUIP as an increment with one of the previous value of a previous session of user U2. This means that the actual value of the session identifier XID21 should always be kept at the user equipment. This is shown in Figure by means of the second memory MEM2. The functional blocks to look-up the previous value of a session identifier and to calculate the new value is not described here in detail. The aim is that this new value is determined and is stored in the second memory MEM2. This new value is looked-up in the second memory means by the first generator by means of the user identification USER2 that is associated to the session identifier XID21.

This user identification USER2 is provided by the user U2 to the user equipment EQUIP. The user identification is here implemented by a "username@servicename" and identifies uniquely the user U2.

When the first generator GEN1 retrieved the right session identifier XID21 and received the user password P-U2 of user U2, the first generator is enabled to generate the required credential C(P-U2; XID21).

The generated credential C(P-U2; XID21) is provided by the first generator GEN1 to the second generator GEN2.

The second generator GEN2 is enabled to comprise in a session message DISCOVER(USER2; XID21; C(P-U2; XID21)) of the DHCP protocol a user identification USER2 uniquely identifying the user U2, the session identifier XID21 and the generated credential C(P-U2; XID21) and to forward this session message DISCOVER(USER2; XID21; C(P-U2; XID21)) to the first part of the authentication device AUTH'.

The user parameter USER2 is provided by the user U2 to the user equipment EQUIP, as described above.

The session identifier XID21 is retrieved by the second generator GEN2, again according to the association with the user identification USER2, and is provided by the second memory MEM2 to this second generator GEN2. In this way, the second generator GEN2 received all information that needs to be included in a session message. In this embodiment it is preferred to use the known DISCOVER message of the DHCP protocol. The authentication information is included in the option-field of this DISCOVER message. The authentication information is the user identification USER2, the session identifier XID21 and the generated credential C(P-U2; XID21).

It has to be remarked here that although this preferred embodiment describes an inclusion of the authentication information all together in the option-field of a DHCP message, that the present invention is limited to such implementations. Indeed, small modifications may be provided by a person skilled in the art, to this present description of an embodiment in order to adapt it to an implementation whereby the three authentication information parts are not included in the option-field of an DHCP message but in the predefined fixed field of the DHCP message. Even more, the three authentication parts doesn't need to be comprises all together in an identical field but can be comprised in the DHCP message according to a distributed way. Under this consideration, it has to be noticed that the session identification XID is already a predefined part of the fixed field in the Discover message whereby it doesn't need to be repeated anymore at an other place in the message (not in de fixed field or not in the option-field of the message). So, as an example, the session identifier can be included in the fixed field of the DHCP message whereby the user identification is comprised at a first place of a first option of the option-field and the credential is included at a second place of a second option of the option-field.

The second generator GEN2 generates this DISCOVER message and includes the authentication information in the option field of it. The generated DISCOVER message is distributed via the access multiplexer AMUX into the Regional Broadband Network towards, among potential others, the first part of the authentication device AUTH'.

Upon reception of the DISCOVER message by the first part of the authentication device AUTH', the session identifier XID21 is extracted from the message and provided to the acceptor ACC. The acceptor determines according to predefined rules and conditions an acceptance of this received session identifier XID21. Therefor, the acceptor first determines an expected session identifier. This expected identifier is determined according to related predefined rules and conditions as were used by the user equipment EQUIP. The acceptor stored therefor a previous value for a previous session of this user U2. The acceptor extracts from the DISCOVER message the user identification USER2 and determines herewith and according to the previously stored information the last used session identifier XID for user U2. Upon detection of the previous session identifier the expected session identifier is determined by the acceptor according to the predefined rules and conditions i.e. incrementing with one. The value of the received session identifier XID21 and the value of the expected session identifier are compared with each other whereby the acceptor provides an acceptance of the actual used session identifier XID21 in the event when these values are lining up with each other. An extra security degree is established with this extra step of verifying the acceptance of the session identifier XID21.

Although that according to this embodiment the acceptor determines one expected value for the session identifier, the acceptor may as well compare the received session identifier with an expected set of session identifiers. An example hereby is that the received session identifier needs to be included in the range between the previous received session identifier plus 10.

Upon generating of an acceptance signal by the acceptor ACC the first part of the authentication device AUTH' is permitted to further forward the authentication information to the second part of the authentication device AUTH".

As described above, the protocol between the first part of the authentication device AUTH' and the second part of the authentication device AUTH" is a Remote Authentication Protocol. It has to be understood that this protocol needs to possess its own secure way to transmit the authentication information. The first part of the authentication device AUTH' comprises the authentication information in one of its messages and transmits it to the second part of the authentication device AUTH".

The second part of the authentication device AUTH" extracts the authentication information i.e. the user identification USER2, the session identifier XID21 and the credential C(P-U2; XID21) from the received message.

The third generator GEN3 is comprised in the second part of the authentication device AUTH" to generate a verification credential VC(P-U2; XID21) based upon the received session identifier XID21 and based upon a user password P-U2 that is associated to the received user identification USER2, and to provide the verification credential (VC(P-U2; XID21)) to a verifier (VER).

Therefor the third generator GEN3 uses the extracted session identifier XID21 and the extracted user identifier USER2. The user identifier USER2 is used to retrieve from the first memory MEM1 the associated user password P-U2. This user password was previously provided and stored by the operator to the second part of the authentication device AUTH".

With the session identifier XID21 and the retrieved user password P-U2 the third generator GEN3 generates its verification credential VC(P-U2; XID21) and provides this to the verifier VER.

The verifier VER is included in the second part of the authentication device to verify the verification credential VC(P-U2; XID21) against the received credential C(P-U2; XID21) and to provide thereby the authentication for the user U2.

Therefor the verifier VER uses the extracted credential C(P-U2; XID21) and the generated verification credential VC(P-U2; XID21). In the event when a match is found between both values, the verifier VER generates a confirmation of the authentication that is transmitted by the second part of the authentication device AUTH" to the first part of the authentication device AUTH' (not shown). The fist part of the authentication device AUTH" confirms this confirmation of the authentication towards the user U2 by means of a DHCP message e.g. the DHCP Offer message that is transmitted to the user equipment EQUIP.

The principle working of the method to provide an authentication for a user will be described now in the following paragraph.

The method to provide an authentication for user U2 during session establishment according to the DHCP protocol between the user equipment EQUIP and the authentication device AUTH comprises the following principle steps:
- providing by the user U2 a user password P-U2 and a user identification USER2 to the user equipment EQUIP; and
- determining by the user equipment EQUIP for that session according to predefined rules and conditions a session identifier XID21; and
- storing this newly calculated session identifier in the second memory MEM2 in association to the user identification USER2; and
- retrieving by the first generator GEN1 from the second memory MEM2 the session identifier XID21 according to the user identification USER2; and
- generating by the first generator GEN1 a credential C(P-U2; XID21) based upon the user password P-U2 and the retrieved session identifier XID21; and
- forwarding by the first generator GEN1 the generated credential C(P-U2; XID21) to the second generator GEN2; and
- comprising in a DISCOVER DHCP session message DISCOVER(USER2; XID21; C(P-U2; XID21)) the user identification USER2 and the session identifier XID21; and
- forwarding by the second generator GEN2 the discover message to the first part of the authentication device AUTH'; and
- extracting by the first part of the authentication device AUTH' the session identifier XID21 and the user identification USER2; and
- determining the previous session identifier being associated to the extracted user identification USER2; and
- determining according to predefined rules and conditions, being related to the one used by the user equipment EQUIP, an actual session identifier; and
- comparing by the acceptor ACC the extracted session identifier XID21 with the locally determined session identifier for the User identification USER2;and
- in the event of identical session identifiers, generating an acceptance of said received session identifier XID21; and
- permitting by the acceptor ACC to the fist part of the authenticator AUTH' a forwarding of the authentication information being the user identification USER2, the session identifier XID21 and the credential C(P-U2; XID21); and
- forwarding according to a secure Remote Authentication protocol RAP by the first part of the authenticating device AUTH' the authentication information; and
- extracting by the second part of the authentication device AUTH" the authentication information; and
- retrieving by the third generator GEN3 according to the extracted user identification USER2 the locally available user password P-U2; and
- generating by the third generator GEN3 a verification credential VC(P-U2; XID21) based upon the retrieved locally user password P-U2 and the extracted session identifier XID21; and
- providing the generated verification credential VC(P-U2; XID21) by the third generator GEN3 to the verifier VER; and
- verifying by the verifier VER the extracted credential C(P-U2; XID21) with the locally generated verification credential VC(P-U2; XID21); and
- in the event of identical credentials, providing by the verifier VER an authentication confirmation message; and
- transmitting the authentication confirmation by the second part of the authentication device AUTH" and according to the Remote Authentication Protocol to the first part of the authentication device AUTH"; and
- further transmitting by the first part of the authentication device AUTH' and according to a DHCP message this confirmation to the user equipment EQUIP whereby the authentication for the user U2 is realized.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method to provide an authentication for a user (U2) in a telecommunication network during session establishment according to a protocol between a user equipment (EQUIP) and an authentication device (AUTH), said method comprises
- generating by said user equipment (EQUIP) a credential (C(P-U2; XID21) based upon a user password (P-U2) being associated to said user (U2) and a session identifier (XID21) being determined by said user equipment (EQUIP) for said session of said user (U2) that is actual being established; and
**characterized in that** said protocol (DHCP) is a Dynamic Host Configuration Protocol and that said method further comprises
- comprising in a session message (DISCOVER(USER2; XID21; C(P-U2; XID21))) of said protocol (DHCP) a user identification (USER2) that uniquely identifies said user (U2), said session identifier (XID21) and said generated credential (C(P-U2; XID21)), and whereby said session message (DISCOVER(USER2; XID21; C(P-U2; XID21))) is a Discover message of said Dynamic Host Configuration Protocol; and
- forwarding said session message (DISCOVER(USER2; XID21; C(P-U2; XID21))) by said user equipment (EQUIP) to said authentication device (AUTH); and
- upon reception by said authentication device (AUTH) of said session message (DISCOVER(USER2; XID21; C(P-U2; XID21))) verifying said received credential (C(P-U2; XID21)) with a generated verification credential (VC(P-U2; XID21)) based upon said received session identifier (XID21) and said user password (P-U2) being associated to said received user identification (USER2) and thereby providing said authentication for said user (U2).

2. The method to provide an authentication for a user (U2) according to claim 1, **characterized in that** said method further comprises also determining according to predefined rules and conditions an acceptance of said received session identifier (XID21).

3. The method to provide an authentication for a user (U2) according to claim 1, **characterized in that** said user identification (USER2), said session identifier (XID21) and said generated credential (C(P-U2; XID21)) being included as a predefined Option in on Option field of said Discover message.

4. The method to provide an authentication for a user (U2) according to any previous claim **characterized in that** said session identifier (XID21) is a transaction identifier according to said Dynamic Host Configuration Protocol that uniquely identifies said session that is actual being established.

5. A user equipment (EQUIP) in a telecommunication network for enabling an authentication for a user (U2) during session establishment according to a protocol (DHCP) between said user equipment (EQUIP) and an authentication device (AUTH), said user equipment (EQUIP) comprises
- a first generator (GEN1) to generate a credential (C(P-U2; XID21) based upon a user password (P-U2) being associated to said user (U2) and a session identifier (XID21) being determined by said user equipment (EQUIP) for said session of said user (U2) that is actual being established;and **characterized in that** said protocol (DHCP) is a Dynamic Host Configuration Protocol and that said user equipment further comprises:
- a second generator (GEN2) to comprise in a session message (DISCOVER(USER2; XID21; C(P-U2; XID21))) of said protocol (DHCP) a user identification (USER2) uniquely identifying said user (U2), said session identifier (XID21) and said generated credential (C(P-U2; XID21)) and to forward said session message (DISCOVER(USER2; XID21; C(P-U2; XID21))) to said authentication device (AUTH) in order to enable thereby said authentication device (AUTH) to verify said received credential (C(P-U2; XID21)) and to provide thereby said authentication for said user (U2), said session message (DISCOVER(USER2; XID21; C(P-U2; XID21))) being a Discover message of said Dynamic Host Configuration Protocol.

6. An authentication device (AUTH) to provide an authentication for a user (U2) in a telecommunication network during session establishment according to a protocol (DHCP) between a user equipment (EQUIP) and said authentication device (AUTH), **characterized by** that said protocol (DHCP) is a Dynamic Host Configuration Protocol and that said authentication device (AUTH) comprises
a third generator (GEN3) to generate a verification credential (VC(P-U2; XID21)) based upon a received session identifier (XID21) and based upon a user password (P-U2) that is associated to a received user identification (USER2), and to provide said verification credential (VC(P-U2; XID21)) to a verifier (VER); and
said verifier (VER) coupled to said third generator (GEN3) to verify said verification credential (VC(P-U2; XID21)) against a received credential (C(P-U2; XID21)) and to provide thereby said authentication for said user (U2);
said received user identification (USER2), said received session identifier (XID21) and said received credential (C(P-U2; XID21)) being received from said user equipment (EQUIP) in a session message (DISCOVER(USER2; XID21; C(P-U2; XID21))) of said protocol (DHCP), whereby said session message (DISCOVER(USER2; XID21; C(P-U2; XID21))) is a Discover message of said Dynamic Host Configuration Protocol.

7. The authentication device (AUTH) according to claim 6, **characterized in that** said authentication device is at least partly included in a network access provider (NAP).

8. Telecommunication network to provide an authentication for a user (U2), **characterized in that** said telecommunication network comprises a user equipment (EQUIP) according to claim 5 and an authentication device (AUTH) according to claim 6 or claim 7.

## Patentansprüche

1. Verfahren zur Bereitstellung einer Authentifizierung für einen Benutzer (U2) in einem Telekommunikationsnetz während des Sitzungsaufbaus entsprechend einem Protokoll zwischen einer Benutzereinrichtung (EQUIP) und einer Authentifizierungs-Einrichtung (AUTH), wobei das Verfahren folgendes umfasst:
- Durch die Benutzereinrichtung (EQUIP) Erzeugung eines Berechtigungsnachweises (C(P-U2; XID21)), der auf einem Benutzer-Passwort (P-U2), welches dem Benutzer (U2) zugeordnet ist, und einer Sitzungskennung (XID21) basiert, die von der Benutzereinrichtung (EQUIP) für die Sitzung des Benutzers (U2) bestimmt wird, die gerade aufgebaut wird; und **dadurch gekennzeichnet, dass** das Protokoll (DHCP) ein Protokoll zur dynamischen Host-Konfiguration (Dynamic Host Configuration Protocol) ist und dass das Verfahren weiterhin folgendes umfasst:
- In einer Sitzungs-Nachricht (DISCOVER(USER2; XID21; C(P-U2; XID21))) des Protokolls (DHCP) Aufnahme einer Benutzerkennung (USER2), die den Benutzer (U2) eindeutig kennzeichnet, der Sitzungskennung (XID21) und des erzeugten Berechtigungsnachweises (C(P-U2; XID21)), wobei die Sitzungs-Nachricht (DISCOVER(USER2; XID21; C(P-U2; XID21))) eine Discover-Nachricht des Dynamic Host Configuration Protocol ist; und
- Weiterleitung der Sitzungs-Nachricht (DISCOVER(USER2; XID21; C(P-U2; XID21))) durch die Benutzereinrichtung (EQUIP) an die Authentifizierungs-Einrichtung (AUTH); und
- Bei Empfang der Sitzungs-Nachricht (DISCOVER(USER2; XID21; C(P-U2; XID21))) durch die Authentifizierungs-Einrichtung (AUTH) Vergleich des empfangenen Berechtigungsnachweises (C(P-U2; XID21)) mit einem erzeugten Überprüfungs-Berechtigungsnachweis (VC(P-U2; XID21)), der auf der empfangenen Sitzungskennung (XID21) und dem Benutzer-Passwort (P-U2) basiert, das der empfangenen Benutzerkennung (USER2) zugeordnet ist, und dadurch Bereitstellung der Authentifizierung für den Benutzer (U2).

2. Das Verfahren zur Bereitstellung einer Authentifizierung für einen Benutzer (U2) gemäß Anspruch 1, **dadurch gekennzeichnet, dass** das Verfahren weiterhin auch die Bestimmung einer Akzeptanz der empfangenen Sitzungskennung (XID21) entsprechend vordefinierter Regeln und Bedingungen umfasst.

3. Das Verfahren zur Bereitstellung einer Authentifizierung für einen Benutzer (U2) gemäß Anspruch 1, **dadurch gekennzeichnet, dass** die Benutzerkennung (USER2), die Sitzungskennung (XID21) und der erzeugte Berechtigungsnachweis (C(P-U2; XID21)) in eine vordefinierte Option eines Options-Feldes der Discover-Nachricht aufgenommen werden.

4. Das Verfahren zur Bereitstellung einer Authentifizierung für einen Benutzer (U2) gemäß jedem der vorherigen Ansprüche, **dadurch gekennzeichnet, dass** die Sitzungskennung (XID21) eine Transaktionskennung entsprechend dem Dynamic Host Configuration Protocol ist, welche die Sitzung, die gerade aufgebaut wird, eindeutig kennzeichnet.

5. Eine Benutzereinrichtung (EQUIP) in einem Telekommunikationsnetz zur Bereitstellung einer Authentifizierung für einen Benutzer (U2) während des Sitzungsaufbaus entsprechend einem Protokoll (DHCP) zwischen der Benutzereinrichtung (EQUIP) und einer Authentifizierungs-Einrichtung (AUTH), wobei die Benutzereinrichtung (EQUIP) folgendes umfasst:
- Einen ersten Generator (GEN1) zur Erzeugung eines Berechtigungsnachweises (C(P-U2; XID21)), der auf einem Benutzer-Passwort (P-U2), das dem Benutzer (U2) zugeordnet ist und einer Sitzungskennung (XID21) basiert, die durch die Benutzereinrichtung (EQUIP) für die Sitzung des Benutzers (U2) bestimmt wird, die gerade aufgebaut wird; und **dadurch gekennzeichnet, dass** das Protokoll (DHCP) ein Protokoll zur dynamischen Host-Konfiguration (Dynamic Host Configuration Protocol) ist und dass die Benutzereinrichtung (EQUIP) weiterhin folgendes umfasst:
- Einen zweiten Generator (GEN2), um in eine Sitzungs-Nachricht (DISCOVER (USER2; XID21; C(P-U2; XID21))) des Protokolls (DHCP) eine Benutzerkennung (USER2), die den Benutzer (U2) eindeutig kennzeichnet, die Sitzungskennung (XID21) und den erzeugten Berechtigungsnachweis (C(P-U2; XID21)) aufzunehmen und die Sitzungs-Nachricht (DISCOVER(USER2; XID21; C(P-U2; XID21))) an die Authentifizierungs-Einrichtung (AUTH) weiterzuleiten, um dadurch die Authentifizierungs-Einrichtung (AUTH) in die Lage zu versetzen, den empfangenen Berechtigungsnachweis (C(P-U2; XID21)) zu überprüfen und dadurch die Authentifizierung für den Benutzer (U2) bereitzustellen, wobei die Sitzungs-Nachricht (DISCOVER(USER2; XID21; C(P-U2; XID21))) eine Discover-Nachricht des Dynamic Host Configuration Protocol ist.

6. Eine Authentifizierungs-Einrichtung (AUTH) zur Bereitstellung einer Authentifizierung für einen Benutzer (U2) in einem Telekommunikationsnetz während des Sitzungsaufbaus entsprechend einem Protokoll (DHCP) zwischen einer Benutzereinrichtung (EQUIP) und der Authentifizierungs-Einrichtung (AUTH), **dadurch gekennzeichnet, dass** das Protokoll (DHCP) ein Dynamic Host Configuration Protocol ist und dass die Authentifizierungs-Einrichtung (AUTH) folgendes enthält:
Einen dritten Generator (GEN3) zur Erzeugung eines Überprüfungs-Berechtigungsnachweises (VC(P-U2; XID21)), der auf einer empfangenen Sitzungskennung (XID21) und einem Benutzer-Passwort (P-U2) basiert, das einer empfangenen Benutzerkennung (USER2) zugeordnet ist, und zur Bereitstellung des Überprüfungs-Berechtigungsnachweises (VC(P-U2; XID21)) an einen Überprüfer (VER); und
Den Überprüfer (VER), der an den dritten Generator (GEN3) gekoppelt ist, um den Überprüfungs-Berechtigungsnachweis (VC(P-U2; XID21)) mit einem empfangenen Berechtigungsnachweis (C(P-U2; XID21)) zu vergleichen und dadurch die Authentifizierung für den Benutzer (U2) bereitzustellen;
Die empfangene Benutzerkennung (USER2), die empfangene Sitzungskennung (XID21) und der empfangene Berechtigungsnachweis (C(P-U2; XID21)) werden von der Benutzereinrichtung (EQUIP) in einer Sitzungs-Nachricht (DISCOVER(USER2; XID21; C(P-U2; XID21))) des Protokolls (DHCP) empfangen, wobei die Sitzungs-Nachricht (DISCOVER(USER2; XID21; C(P-U2; XID21))) eine Discover-Nachricht des Dynamic Host Configuration Protocol ist.

7. Die Authentifizierungs-Einrichtung (AUTH) gemäß Anspruch 6, **dadurch gekennzeichnet, dass** die Authentifizierungs-Einrichtung mindestens teilweise in einem Netzwerk-Zugangs-Anbieter (NAP) enthalten ist.

8. Telekommunikationsnetz zur Bereitstellung einer Authentifizierung für einen Benutzer (U2), **dadurch gekennzeichnet, dass** das Telekommunikationsnetz eine Benutzereinrichtung (EQUIP) gemäß Anspruch 5 und eine Authentifizierungs-Einrichtung (AUTH) gemäß Anspruch 6 oder Anspruch 7 enthält.

## Revendications

1. Procédé destiné à fournir une authentification pour un utilisateur (U2) d'un réseau de télécommunication au cours de l'établissement d'une session selon un protocole entre un équipement de l'utilisateur (EQUIP) et dispositif d'authentification (AUTH), ledit procédé comprenant les étapes consistant à
- générer le ledit équipement de l'utilisateur (EQUIP) une référence (C(P-UD ; XID21)) basée sur un mot de passe d'utilisateur (P-U2) étant associé audit utilisateur (U2) et un identificateur de session (XID21) étant déterminé par ledit équipement de l'utilisateur (EQUIP) pour ladite session dudit utilisateur (U2) qui est en train d'être établie ; et **caractérisé en ce que** ledit protocole (DHCP) est un protocole DHCP et **en ce que** ledit procédé comprend en outre
- un message de session (DISCOVER(USER2 ; XID21 ; C(P-U2 ; XID21))) dudit protocole (DHCP) une identification d'utilisateur (USER2) qui identifie de manière unique ledit utilisateur (U2), ledit identificateur de session (XID21) et ladite référence générée (C(P-U2 ; XID21)), et par lequel ledit message de session (DISCOVER(USER2 ; XID21 ; C(P-U2 ; XID21))) est un message Discover (découverte) dudit protocole DHCP ; et
- transmettre ledit message de session (DISCOVER(USER2 ; XID21 ; C(P-U2 ; XID21))) par ledit équipement de l'utilisateur (EQUIP) sur ledit dispositif d'authentification (AUTH) ; et
- lors de la réception par ledit dispositif d'authentification (AUTH) dudit message de session (DISCOVER(USER2 ; XID21 ; C(P-U2 ; XID21))) vérifiant ladite référence reçue (C(P-U2 ; XID21)) avec une référence de vérification générée (VC(P-U2 ; XID21)) sur la base dudit identificateur de session reçu (XID21) et dudit mot de passe de l'utilisateur (P-U2) étant associé à ladite identification de l'utilisateur reçue (USER2) et fournissant ainsi ladite authentification pour ledit utilisateur (U2).

2. Procédé destiné à fournir une authentification pour un utilisateur (U2) selon la revendication 1, **caractérisé en ce que** ledit procédé comprend, en outre, également un moyen de déterminer selon des règles et des conditions prédéfinies une acceptation dudit identificateur de session reçu (XID21).

3. Procédé destiné à fournir une authentification pour un utilisateur (U2) selon la revendication 1, **caractérisé en ce que** ladite identification de l'utilisateur (USER2), ledit identificateur de session (XID21) et ladite référence générée (C(P-U2 ; XID21)) étant inclus comme une option prédéfinie dans un champ d'option dudit message Discover.

4. Procédé destiné à fournir une authentification pour un utilisateur (U2) selon l'une quelconque des revendications précédentes, **caractérisé en ce que** ledit identificateur de session (XID21) est un identificateur de transaction selon ledit protocole DHCP qui identifie de manière unique ladite session qui est en train d'être établie.

5. Equipement de l'utilisateur (EQUIP) dans un réseau de télécommunication destiné à permettre l'authentification pour un utilisateur (U2) au cours de l'établissement d'une session selon un protocole (DHCP) entre ledit équipement de l'utilisateur (EQUIP) et un dispositif d'authentification (AUTH), ledit équipement de l'utilisateur (EQUIP) comprenant :
- un premier générateur (GEN1) pour générer une référence (C(P-U2 ; XID21) sur la base d'un mot de passe d'utilisateur (P-U2) étant associé audit utilisateur (U2) et d'un identificateur de session (XID21) étant déterminé par ledit équipement de l'utilisateur (EQUIP) pour ladite session dudit utilisateur (U2) qui est en train d'être établie ; et **caractérisé en ce que** ledit protocole (DHCP) est un protocole DHCP et **en ce que** ledit équipement de l'utilisateur comprend en outre :
- un deuxième générateur (GEN2) pour comprendre dans un message de session (DISCOVER(USER2 ; XID21 ; C(P-U2 ; XID21))) dudit protocole (DHCP) une identification d'utilisateur (USER2) identifiant de manière unique ledit utilisateur (U2), ledit identifiant de session (XID21) et ladite référence générée (C(P-U2 ; XID21)) pour transmettre ledit message de session (DISCOVER(USER2 ; XID21 ; C(P-U2 ; XID21))) audit dispositif d'identification (AUTH) afin de permettre ainsi audit dispositif d'identification (AUTH) de vérifier ladite référence reçue (C(P-U2 ; XID21)) et de fournir ainsi ladite authentification pour ledit utilisateur (U2), ledit message de session (DISCOVER(USER2 ; XID21 ; C(P-U2 ; XID21))) étant un message Discover dudit protocole DHCP.

6. Dispositif d'authentification (AUTH) destiné à fournir une authentification pour un utilisateur (U2) dans un réseau de télécommunication en utilisant un établissement de session selon un protocole (DHCP) entre un équipement de l'utilisateur (EQUIP) et ledit dispositif d'authentification (AUTH), **caractérisé en ce que** ledit protocole (DHCP) est un protocole DHCP et **en ce que** ledit dispositif d'authentification (AUTH) comprend
un troisième générateur (GEN3) pour générer une référence de vérification (VC(P-U2 ; XID21)) sur la base d'un identificateur de session reçu (XID21) et sur la base d'un mot de passe de l'utilisateur (P-U2) qui est associé à une identification de l'utilisateur reçue (USER2), et pour fournir ladite référence de vérification (VC(P-U2 ; XID21)) à un vérificateur (VER) ; et
ledit vérificateur (VER) couplé audit troisième générateur (GEN3) pour vérifier ladite référence de vérification (VC(P-U2; XID21)) par rapport à une référence reçue (C(P-U2 ; XID21)) et pour fournir ainsi ladite authentification pour ledit utilisateur (U2) ;
ladite identification d'utilisateur reçue (USER2), ledit identificateur de session reçu (XID21) et ladite référence reçue (C(P-U2 ; XID21)) étant reçus en provenance dudit équipement de l'utilisateur (EQUIP) dans un message de session (DISCOVER(USER2 ; XID21 ; C(P-U2 ; XID21))) dudit protocole (DHCP), moyennant quoi ledit message de session (DISCOVER(USER2 ; XID21 ; C(P-U2 ; XID21))) dudit protocole DHCP.

7. Dispositif d'authentification (AUTH) selon la revendication 6, **caractérisé en ce que** ledit dispositif d'authentification est au moins partiellement inclus dans un fournisseur d'accès au réseau (NAP).

8. Réseau de télécommunication destiné à fournir une authentification pour un utilisateur (U2), **caractérisé en ce que** ledit réseau de télécommunication comprend un équipement de l'utilisateur (EQUIP) selon la revendication 5 et un dispositif d'authentification (AUTH) selon la revendication 6 ou la revendication 7.
